# EUROPÄISCHE PATENTSCHRIFT

(11) **EP 1 356 632 B1**
(45) Veröffentlichungstag und Bekanntmachung des Hinweises auf die Patenterteilung: **16.07.2008**
(21) Anmeldenummer: 01273481.0
(22) Anmeldetag: 21.12.2001
(51) Int. Cl.: H04L 12/12, H04L 12/40

(54) **BUSSYSTEM MIT EINER LEITUNGSKONTROLLE WÄHREND DES RUHEZUSTANDES**
BUS SYSTEM WITH LINE CONTROL DURING THE LOW-POWER PHASE
SYSTEME DE BUS COMPORTANT UN CONTROLE DE LIGNES PENDANT LA PHASE DE REPOS

(30) Priorität: 25.01.2001 DE 10103323
(43) Veröffentlichungstag der Anmeldung: 29.10.2003
(73) Patentinhaber: NXP B.V., 5656 AG Eindhoven (NL); Philips Corporate Intellectual Property GmbH, 20099 Hamburg (DE)
(72) Erfinder: MUTH, Matthias, NL-5656 AA Eindhoven (NL)
(74) Vertreter: von Laue, Hanns-Ulrich
(86) Internationale Anmeldenummer: PCT/IB2001/002698
(87) Internationale Veröffentlichungsnummer: WO 2002/060125

(56) Entgegenhaltungen:
- WO-A-99/46888
- DE-A- 19 509 133
- DE-A- 19 637 312
- US-A- 5 781 585
- US-A- 5 994 931

## Beschreibung

Die Erfindung bezieht sich auf ein Bussystem mit einer Low-Power-Phase, in der Busteilnehmer sich verglichen mit dem Zustand aktiven Sendens in einem Zustand verringerter Stromaufnahme befinden, den sie verlassen, wenn die Busleitungen des Busses Länger als eine vorgegebene Zeitspanne aktiv sind. Derartige Bussysteme, bei denen es sich beispielsweise um einen CAN-Bus handeln kann, sind bereits bekannt. Derartige Low-Power-Phasen sind dazu vorgesehen, die Stromaufnahme der Busteilnehmer während inaktiver Zeiten zu verringern. Dies ist insbesondere in mobilen Fahrzeugen mit ihrem begrenzten Energievorrat sinnvoll.

Bei einer aus der WO 99/46888 bekannten Lösung sind die Busteilnehmer mittels Schaltsignalen von einem Ruhezustand in den Bereitschaftszustand und von dort in den Normalzustand schaltbar. Aus DE 196 37 312 ist ein Netzwerk bekannt, dessen Master in der Lage ist, die übrigen Busteilnehmer in einen Stromsparmodus zu versetzen.

Bei bekannten Lösungen bleiben die Busteilnehmer so lange in der Low-Power-Phase, bis auf dem Bus während einer Zeitspanne aktiv gesendet wird, die eine vorgegebene Zeitspanne, bei der es sich um eine Art Weckzeit handelt, überschreitet. Wird diese vorgegebene Zeit des aktiven Zustandes des Busses überschritten, verlassen die Busteilnehmer die Low-Power-Phase und gehen über in den Betriebszustand, in dem sie Daten auf dem Bus senden oder empfangen können. Eine derartige Ausgestaltung der Low-Power-Phase ist beispielsweise von den Transceivern mit den Typenbezeichnungen PCA 82 C 252, TJA 1053 und TJA 1054 der Firma Philips bekannt.

Vielfach ist es wünschenswert, auch während einer solchen Low-Power-Phase den Zustand des Busses zu überwachen, insbesondere zu überprüfen, ob der Bus weiterhin richtig arbeitet bzw. ob die Busleitungen unterbrochen sind. Bei der Lösung nach dem Stand der Technik ist dies nicht möglich.

Es ist daher Aufgabe der Erfindung, das oben genannte Bussystem eingehend weiter zu entwickeln, dass auch während der Low-Power-Phase eine Funktionsüberwachung des Busses möglich ist.

Diese Aufgabe ist für ein Bussystem der eingangs genannten Art dadurch gelöst, dass die Busteilnehmer die Low-Power-Phase verlassen, wenn die Busleitungen (1,2) länger als eine vorgegebene Zeitspanne aktiv sind, wobei während einer Low-Power-Phase durch einen ersten Busteilnehmer (3) zyklisch wenigstens ein Impuls auf dem Bus gesendet wird, dessen Dauer die vorgegebene Zeitspanne unterschreitet und welcher von wenigstens einem zweiten Busteilnehmer (4) zur Überwachung der Busleitungen (1,2) des Busses empfangen und ausgewertet wird.

Eine Überwachung des Zustands des Busses wird somit auch während einer Low-Power-Phase dadurch möglich, dass ein Teilnehmer, sich zyklisch wiederholend, wenigstens einen Impuls während einer solchen Low-Power-Phase auf den Datenbus gibt, wobei die zeitliche Dauer dieses Impulses oder der Impulse so gewählt sein muss, dass sie die vorgegebene Zeitspanne unterschreitet. Dies hat zur Folge, dass die "normalen " Busteilnehmer durch diese Impulse nicht aufgeweckt werden, da die Dauer der Impulse kürzer ist als die vorgegebene Zeitspanne, die Busteilnehmer die Low-Power-Phase aber erst dann verlassen, wenn ein oder mehrere Impulse auf dem Bus auftauchen, deren Dauer diese Zeitspanne überschreitet.

Es ist wenigstens ein anderer Busteilnehmer vorgesehen, der auch während einer Low-Power-Phase die Leitungen des Busses überwacht. Diese Überwachung kann ggf. auch in einem zyklischen Rhythmus vorgenommen werden. Empfängt dieser zweite Busteilnehmer während einer Low-Power-Phase zyklisch diesen Impuls, so bedeutet dies eine weiterhin einwandfreie Funktion des Busses. Wird dieser Impuls nicht mehr durch den zweiten Busteilnehmer empfangen, so liegt eine Fehlfunktion des Busses vor.

Für diese Überprüfung der Funktion des Busses während einer Low-Power-Phase müssen nur der erste und der zweite Busteilnehmer zyklisch geweckt werden, um den Impuls zu senden bzw. zu empfangen. Andere Busteilnehmer können in der Low-Power-Phase verbleiben. Dennoch ist auf diese Weise auch in der Low-Power-Phase eine zyklische Überprüfung der Funktion des Busses möglich.

Nach einer Ausgestaltung der Erfindung nach Anspruch 2 kann der zweite Busteilnehmer vorteilhaft dann, wenn er während einer Low-Power-Phase feststellt, dass der normalerweise zyklisch auftauchende, von dem ersten Busteilnehmer gesendete Impuls ausbleibt, ein Alarmsignal abgeben, welches beispielsweise den beteiligten Busteilnehmern signalisiert, dass die Funktion des Busses gestört ist. Dies kann beispielsweise in Kraftfahrzeugen dazu eingesetzt werden, für über dieses Bussystem vernetzte Alarmanlagen gleichzeitig eine Überprüfung des Bussystems vorzunehmen und Alarm auch dann auszulösen, wenn das Bussystem, beispielsweise durch Manipulation an den Busleitungen, gestört ist.

Um auch bei dem sendenden ersten Busteilnehmer während der Low-Power-Phase eine Energieeinsparung zu erzielen, ist nach einer weiteren Ausgestaltung der Erfindung nach Anspruch 3 vorgesehen, dass der Busteilnehmer sich normalerweise in der Low-Power-Phase befindet und zum Senden der zyklischen Impulse durch eine Watchdog-Schalung in eben diesem Zyklus geweckt wird.

Entsprechendes gilt gemäß einer weiteren Ausgestaltung der Erfindung nach Anspruch 6 für den zyklisch gesendeten Impuls auswertenden zweiten Busteilnehmer, der vorteilhaft mit einer Watchdog-Schaltung zyklisch zum Auswerten des Impulses geweckt wird. Auch hier bleibt auf diese Weise ein wesentlicher Teil der Energie-sparvorteile der Low-Power-Phase erhalten.

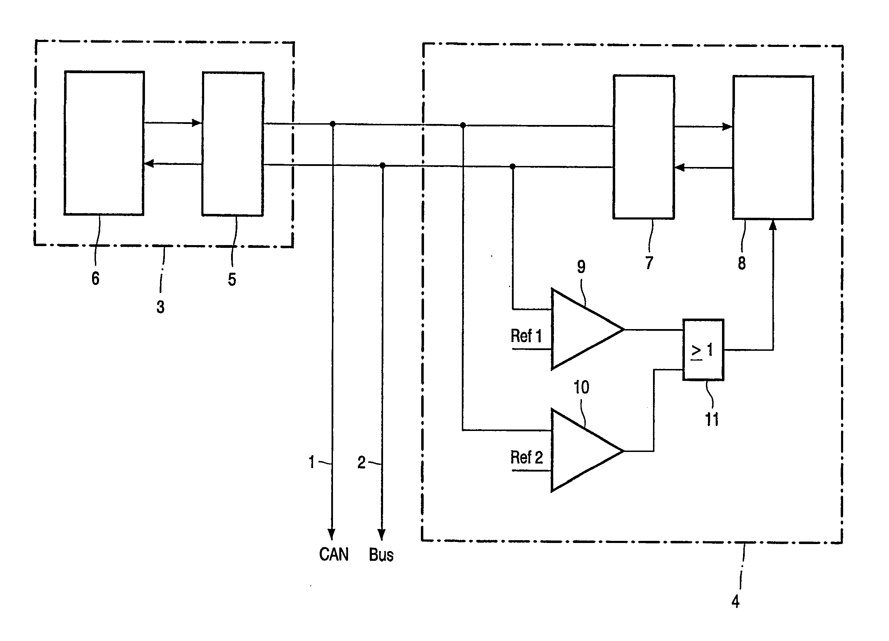

Nachfolgend wird ein Ausführungsbeispiel anhand der Zeichnung näher erläutert.

Die Zeichnung zeigt in Form eines Blockschaltbildes einen CAN-Bus sowie einen ersten Teilnehmer 3 und einen zweiten Teilnehmer 4.

An dem CAN-Bus, der Leitungen 1 und 2 aufweist, sind weitere Teilnehmer angeschlossen, die in der Figur nicht dargestellt sind. Diese Teilnehmer übertragen, ebenso wie der erste Teilnehmer 3 und der zweite Teilnehmer 4 , ihre Daten auf den beiden Leitungen 1 und 2 des CAN-Busses differenziell, d.h. ein zu übertragendes Bit wird auf dem Bus in der Weise dominant übertragen, dass das Potential beispielsweise der Leitung 1 angehoben und das der Leitung 2 abgesenkt wird. Die Funktionsweise und das Protokoll eines derartigen CAN-Busses sind in der ISO-Spezifikation 11898 festgelegt.

Bei bekannten Lösungen ist zur Energieeinsparung eine sogenannte Low-Power-Phase vorgesehen, in die die Busteilnehmer versetzt werden können. Die Busteilnehmer wachen aus dieser Low-Power-Phase erst dann wieder auf, wenn auf den Busleitungen 1 und 2 länger als während einer vorgegebenen Zeitspanne ein dominantes Signal auftaucht.

Befinden sich die Busteilnehmer in dem Zustand der Low-Power-Phase, besteht bei den Lösungen nach dem Stand der Technik keine Möglichkeit, die Funktion des Busses bzw. der Busleitungen 1 und 2 zu überprüfen, da alle Busteilnehmer inaktiv sind.

Für bestimmte Anwendungen in Kraftfahrzeugen besteht jedoch der Wunsch, die Funktion des Busses dauernd zu überwachen. Dies ist beispielsweise für über diesen Bus vernetzte Alarmanlagen in Kraftfahrzeugen wünschenswert.

Hierzu ist gemäß der Erfindung ein erster Busteilnehmer 3 vorgesehen, der während der Low-Power-Phasen in sich zyklisch wiederholendem Rhythmus wenigstens einen Impuls einer solchen Dauer sendet, die die vorgegebene Zeitspanne unterschreitet.

Es ist ferner wenigstens ein zweiter Busteilnehmer 4 vorgesehen, der in eben dem gleichen sich zyklisch wiederholendem Rhythmus überprüft, ob er diesen - von dem ersten Busteilnehmer 3 gesendeten - Impuls empfängt. Ist dies der Fall, so arbeitet der Bus einwandfrei. Erhält der Busteilnehmer 4 jedoch diesen Impuls nicht, so liegt ein Fehler der Funktion des CAN-Busses vor, und der zweite Busteilnehmer 4 kann einen entsprechenden Alarm auslösen.

Im Folgenden wird auf die Funktion des ersten Busteilnehmers 3 und des zweiten Busteilnehmers 4 anhand des Blockschaltbildes näher eingegangen.

Das Blockschaltbild zeigt, dass der erste Busteilnehmer 3 einen Transceiver 5 aufweist, der die Verbindung mit den Leitungen 1 und 2 des CAN-Busses herstellt und Daten von diesem empfangen oder auf diesen senden kann.

Mit dem Transceiver 5 ist ein Microcontroller mit einer Watchdog-Funktion 6 gekoppelt. Der Microcontroller 6 steuert den Transceiver und behandelt beispielsweise das Busprotokoll des CAN-Busses. Erfindungsgemäß ist jedoch in dem Microcontroller 6 auch eine Watchdog-Funktion integriert, welche dann, wenn sich der erste Busteilnehmer 3 und der CAN-Bus sich in einer Low-Power-Phase befinden, in zyklischen Abständen den ersten Busteilnehmer 3 "weckt" und den Transceiver 5 veranlasst, einen Impuls auf den Leitungen 1 und 2 des CAN-Busses zu senden. Dabei ist zu beachten, dass die zeitliche Dauer dieses Impulses kürzer sein muß als diejenige vorgegebene Zeitspanne, die bei dominantem Bus die sich in der Low-Power-Phase befindenden Busteilnehmer "aufweckt", so dass diese die Low-Power-Phase verlassen.

Die Watchdog-Schaltung in dem Microcontroller 6 bewirkt somit, dass mittels des Transceivers sich zyklisch wiederholend ein Impuls auf den Leitungen 1 und 2 des CAN-Busses dominant übertragen wird, dessen Dauer nicht dazu führt, dass die anderen Busteilnehmer aufgeweckt werden. Dies gilt insbesondere für weitere, in der Figur nicht dargestellte Busteilnehmer, die diesen Impuls nicht überwachen.

Erfindungsgemäß ist in dem Bussystem der zweite Busteilnehmer 4 vorgesehen, der einen Transceiver 7 aufweist, der mit den beiden Leitungen 1 und 2 des CAN-Busses gekoppelt ist. Der Transceiver 7 wird seinerseits von einem Microcontroller 8 gesteuert, in den ebenfalls eine Watchdogfunktion integriert ist.

In dem zweiten Busteilnehmer 4 ist ferner ein erster Komparator 9 vorgesehen, welcher das Potential der zweiten Busleitung 2 mit einem Referenzpotential Ref1 vergleicht. Ein zweiter Komparator 10 vergleicht das Potential der ersten Busleitung 1 mit einem zweiten Referenzpotential 2.

Wird auf den beiden Datenbusleitungen 1 und 2 ein Bit dominant übertragen, so überschreitet das Potential der Busleitung 1 während dieser Zeit dasjenige des Referenzpotentials Ref2, und der zweite Comperator 10 gibt ein entsprechendes Ausgangssignal ab. In entsprechender Weise gibt bei einem dominant auf der Busleitung 2 gesendeten Bit infolge des Potentialsabfalls dieser Leitung der Komparator 9 dann ein Signal ab, wenn das Potential dieser Leitung das erste Referenzpotential Ref1 unterschreitet.

Bei normaler Funktion des Datenbusses müßten also beide Komparatoren 9 und 10 jeweils ein Signal abgeben, solange auf dem Datenbus ein Bit dominant gesendet wird. Für die erfindungsgemäße Fehlerauswertung werden die beiden Ausgangssignale der Komparatoren 9 und 10 mittels eines Odergatters 11 verknüpft, dessen Ausgangssignal dem Microcontroller 8 des zweiten Busteilnehmers 4 zugeführt wird.

Der Microcontroller 8 wertet das Ausgangssignal des Odergatters 11 in dem oben beschriebenen Zyklus aus, indem in einer Low-Power-Phase der erste Busteilnehmer 3 einen Impuls auf den Busleitungen 1 und 2 sendet. In eben diesem Zyklus müßten nämlich bei einwandfreier Funktion des CAN-Busses sowohl der Komparator 9 als auch der Comperator 10 ein Ausgangssignal abgeben, welches über das Odergatter 11 an den Microcontroller 8 gelangt und von diesem ausgewertet wird.

In dem Ausführungsbeispiel ist infolge der Verknüpfung der beiden Ausgangssignale der Komparatoren 9 und 10 Sitz des ODER-Gatters 11 davon ausgegangen,dass es hinreichend ist, wenn eine der Busleitungen 1 oder 2 des CAN-Busses eine einwandfreie Funktion ausführt, da in diesem Fall noch eine Busfunktion gewährleistet ist. Somit wird die Auswertung mittels des Microcontrollers 8 in der Weise erfolgen, dass bereits dann, wenn einer der beiden Komparatoren 9 oder 10 ein Ausgangssignal abgibt, von einer einwandfreien Funktion des Busses ausgegangen wird.

Stellt der Microcontroller 8 hingegen in dem oben beschriebenen Zyklus fest, dass er kein Signal von dem ODER-Gatter 11 erhält, so ist weder auf der Busleitung 1 noch auf der Busleitung 2 der von dem ersten Busteilnehmer 3 gesendete Impuls empfangen worden. Somit liegt eine Störung des Busses vor. In diesem Fall kann der Microcontroller 8 des zweiten Busteilnehmers 4 vorteilhaft einen Alarm auslösen.

Im Ergebnis wird mittels des erfindungsgemäßen Bussystems auch in einer Low-Power-Phase eine Überwachung der Funktion des Busses bzw. der Busleitungen 1 und 2 erzielt. Dazu müssen lediglich der erste Busteilnehmer 3 und der zweite Teilnehmer 4 zyklisch für kurze Zeit jeweils die Low-Power-Phase verlassen. Alle übrigen Busteilnehmer können auch während dieser zyklischen Überprüfungsphasen in dem Low-Power-Zustand verbleiben.

Somit wird insgesamt - trotz der möglichen Überprüfung der Funktion des Busses in seiner Low-Power-Phase - ein "Aufwecken" der meisten Busteilnehmer nicht erforderlich. Auch die Busteilnehmer 3 und 4 können je nach Anwendung lange in ihrer Low-Power-Phase verweilen und müssen nur zyklisch für die Prüfphase geweckt werden. Die Zykluszeit ergibt sich aus der erforderlichen Reaktionsgeschwindigkeit auf Kabelmanipulationen.

## Patentansprüche

1. Verfahren zum Betrieb eines Bussystems mit einer Low-Power-Phase, in der Busteilnehmer sich verglichen mit dem Zustand aktiven Sendens in einem Zustand mit verringerter Stromaufnahme befinden, **dadurch gekennzeichnet, dass** die Busteilnehmer die Low-Power-Phase verlassen, wenn die beiden Busleitungen (1,2) länger als eine vorgegebene Zeitspanne aktiv sind, wobei während einer Low-Power-Phase durch einen ersten Busteilnehmer (3) zyklisch wenigstens ein Impuls auf dem Bus gesendet wird, dessen Dauer die vorgegebene Zeitspanne unterschreitet und welcher von wenigstens einem zweiten Busteilnehmer (4) zur Überwachung der beiden Busleitungen (1,2) des Busses empfangen und ausgewertet wird.

2. Verfahren zum Betrieb eines Bussystems nach Anspruch 1, **dadurch gekennzeichnet, dass** der den zyklisch während einer Low-Power-Phase auf dem Bus gesendeten Impuls auswertende zweite Busteilnehmer (4) ein Alarmsignal abgibt, wenn er während wenigstens eines Zyklus den Impuls nicht empfängt.

3. Verfahren zum Betrieb eines Bussystems nach Anspruch 1, **dadurch gekennzeichnet, dass** der den Impuls sendende erste Busteilnehmer (3) während einer Low-Power-Phase zum Senden des Impulses zyklisch mittels einer Watchdog-Schaltung geweckt wird.

4. Verfahren zum Betrieb eines Bussystems nach Anspruch 1, **dadurch gekennzeichnet, dass** es sich bei dem Bussystem um einen CAN-Bus handelt.

5. Verfahren zum Betrieb eines Bussystems nach Anspruch 4, **dadurch gekennzeichnet, dass** der zyklisch während einer Low-Power-Phase auf dem Bus gesendete Impuls auf beiden Busleitungen (1,2) gesendet wird.

6. Verfahren zum Betrieb eines Bussystems nach Anspruch 1 und 5, **dadurch gekennzeichnet, dass** der den zyklisch während einer Low-Power-Phase auf dem Bus gesendeten Impuls auswertende zweite Busteilnehmer (4) mittels zweier Komparatoren (9,10) und einer Watchdog-Schaltung zyklisch eine Auswertung beider Busleitungen (1,2) vornimmt und dann ein Alarmsignal abgibt, wenn der zyklisch während einer Low-Power-Phase auf dem Bus gesendete Impuls auf beiden Busleitungen (1,2) ausbleibt.

## Claims

1. A method of operating a bus system with a low-power phase, in which bus participants are in a state of reduced current consumption compared to the state of active transmission, **characterized in that** the bus participants leave the low-power state when the two bus lines (1,2) are active for a longer period than a predetermined time interval, in which a first participant (3) cyclically transmits at least one pulse on the bus during a low-power phase, which pulse has a duration that is shorter than the predetermined time interval and is received and evaluated at least by a second bus participant (4) for the purpose of monitoring the two bus lines (1, 2).

2. A method of operating a bus system as claimed in claim 1, **characterized in that** the second bus participant (4) evaluating the pulse cyclically transmitted on the bus during a low-power phase produces an alarm signal when it does not receive the pulse at least during one cycle.

3. A method of operating a bus system as claimed in claim 1, **characterized in that** for transmitting the pulse, the first bus participant (4) transmitting the pulse during a low-power phase is cyclically woken up by means of a watchdog circuit.

4. A method of operating a bus system as claimed in claim 1, **characterized in that** the bus system is a CAN bus.

5. A method of operating a bus system as claimed in claim 4, **characterized in that** the pulse cyclically transmitted on the bus during a low-power phase is transmitted on the two bus lines (l, 2).

6. A method of operating a bus system as claimed in claims 1 and 5, **characterized in that** the second bus participant (4) evaluating the pulse cyclically transmitted on the bus during a low-power phase cyclically performs an evaluation of the two bus lines (1, 2) by means of two comparators (9, 10) and a watchdog circuit (8), and then supplies an alarm signal when the pulse cyclically transmitted on the bus during a low-power phase does not appear on the two bus lines (1, 2).

## Revendications

1. Procédé pour le fonctionnement d'un système de bus avec une phase basse puissance, dans lequel des abonnés du bus, par rapport à l'état d'émission actif, se trouvent dans un état avec une absorption de courant moindre, **caractérisé en ce que** les abonnés de bus quittent la phase basse puissance lorsque les deux lignes de bus (1, 2) sont actives pour une durée plus longue qu'une durée préétablie, de sorte que pendant une phase basse puissance par un premier abonné de bus (3), au moins une impulsion est cycliquement envoyée sur le bus dont la durée est au-dessous de la durée préétablie, et qui est reçue et évaluée par au moins un deuxième abonné de bus (4) pour surveiller les deux lignes de bus (1, 2) du bus.

2. Procédé pour le fonctionnement d'un système de bus selon la revendication 1, **caractérisé en ce que** le deuxième abonné de bus (4), évaluant cycliquement l'impulsion envoyée sur le bus pendant une phase basse puissance, émet un signal d'alarme lorsqu'il ne reçoit pas l'impulsion pendant au moins un cycle.

3. Procédé pour le fonctionnement d'un système de bus selon la revendication 1, **caractérisé en ce que** le premier abonné de bus (3) émettant l'impulsion pendant une phase basse puissance est relayé pour l'envoi de l'impulsion cycliquement au moyen d'une commutation chien de garde (watchdog).

4. Procédé pour le fonctionnement d'un système de bus selon la revendication 1, **caractérisé en ce qu'**il s'agit, pour le système de bus, d'un bus CAN.

5. Procédé pour le fonctionnement d'un système de bus selon la revendication 4, **caractérisé en ce que** l'impulsion envoyée cycliquement pendant une phase basse puissance sur le bus est envoyée sur les deux lignes du bus (1, 2).

6. Procédé pour le fonctionnement d'un système de bus selon les revendication 1 et 5, **caractérisé en ce que** l'impulsion envoyée cycliquement pendant une phase basse puissance sur le bus, évaluant le deuxième abonné de bus (4), effectue cycliquement au moyen de deux comparateurs (9, 10) et d'une commutation chien de garde (watchdog), une évaluation des deux lignes de bus (1, 2) et ensuite émet un signal d'alarme lorsque l'impulsion envoyée cycliquement pendant une phase basse puissance sur le bus reste sur les deux lignes de bus (1, 2).
